# EUROPEAN PATENT APPLICATION

(11) **EP 3 800 167 A1**
(43) Date of publication of application: **07.04.2021**
(21) Application number: 19306290.8
(22) Date of filing: 04.10.2019
(51) Int. Cl.: C03C 17/00, B05D 5/08, C03C 17/30, G02B 1/18, G02C 7/02

(54) **ARTICLE WITH A HYDROPHILIC SURFACE COATED WITH A TEMPORARY SUPER-HYDROPHOBIC FILM AND PROCESS FOR OBTAINING SAME**

(71) Applicant: ESSILOR INTERNATIONAL, 94220 Charenton-Le-Pont (FR)
(72) Inventor: FEUILLADE, Mathieu, 94220 CHARENTON LE PONT (FR); MERIDIANO, Camille, 94220 CHARENTON LE PONT (FR); BONNET, Isabelle, 94220 CHARENTON LE PONT (FR); PORTET, David, 49100 ANGERS (FR); FAVRAT, Olivier, 49100 ANGERS (FR)
(74) Representative: Jacobacci Coralis Harle

(57) **Abstract**

The present invention relates to an article having a surface coated with a nanostructured temporary super-hydrophobic film having a static contact angle with water of at least 140°, and comprising nanoparticles functionalized with a hydrophobic agent, wherein the functionalization of the nanoparticles with the hydrophobic agent has been performed before said nanostructured temporary super-hydrophobic film is coated on said surface. The surface of the article exhibits a static contact angle with water of less than 60° before being coated with the nanostructured temporary super-hydrophobic film. The treatment according to the invention can be used to provide an antirain function to optical articles having a hydrophilic surface.

## Description

The invention relates to articles coated with a temporary nanostructured film providing super-hydrophobic properties, a coating process for their manufacture as well as the use of such super-hydrophobic films, especially in the optical technical field and in particular with ophthalmic lenses. The films comprise a nanostructured layer based on nanoparticles functionalized with a hydrophobic agent.

Increasingly, the trend is seeking to functionalize articles made from mineral or organic glass by depositing onto the surface thereof coatings that are a few nanometers or micrometers thick in order to impart a given property depending on the intended use. Thus, anti-reflection, abrasion-resistant, scratch-resistant, impact-resistant, anti-fogging or antistatic layers can be provided.

Very numerous supports, such as plastic materials and glass, suffer as a drawback from becoming covered with fog when their surface temperature decreases below the dew point of ambient air. The fogging that develops on these surfaces leads to a decrease in transparency, due to the diffusion of light through water drops, which may cause a substantial discomfort.

To prevent any fog formation in very damp environments, that is to say the condensation of very little water droplets on a support, it is known to apply a hydrophilic solution onto the surface of an antifog precursor coating. This technical solution is disclosed for example in the patent applications WO 2011/080472 and WO 2013/013929, in the name of the applicant. The antifog coating precursor is a hydrophilic coating formed onto the outer surface of an article through the grafting of at least one organosilane such as CH₃O-(CH₂CH₂O)₆₋₉-(CH₂)₃Si(OCH₃)₃, has a thickness lower than or equal to 5 nm and a static contact angle with water of more than 10° and of less than 50°. The antifog coating as such is obtained after application of a surfactant onto the surface of the precursor coating. It is a temporary coating, since it can be removed by a simple wiping operation, but is easily renewable.

However, under rain, even on hydrophilic surfaces, the streaming of water droplets causes a strong vision discomfort because of image distortion. Rain drops will adhere to such surfaces, and although the drops will spread out, this takes enough time to result in optical distortion and visual impairment.

A material is said to be super-hydrophobic when its surface is very difficult to wet with water. Such surfaces have very high contact angles, generally above 140°. This is the case for lotus leaves. The same is true for duck feathers, which remain dry coming out of the water.

Although this phenomenon is known for years, it has only been recently studied. Barthlott has first described in WO 96/04123 how a surface becomes super-hydrophobic when roughness on a micron or sub-micron scale and hydrophobic properties are combined. Since then, methods of forming super-hydrophobic coatings ranging from 140° to almost 180° and applying such super-hydrophobic coatings to surfaces have been extensively described, by creating micro or nanostructures, using nanofibers, nanoparticles, mesh-like substrates, cotton fibers, or through sol-gel processes, surface polymerizations or crystallizations.

The wettability of a surface depends on both the chemistry (chemical nature of the surface material) and the physical topography, especially surface roughness. It is well known that static contact angles with water of smooth hydrophobic surfaces are usually less than 115°, but when the hydrophobic surface becomes rough, it develops ultra high hydrophobic properties (i.e., water contact angles ≥ 115°). The static water contact angle may dramatically increase to 140°, and even higher (super-hydrophobic surfaces).

Roughness associated with high static water contact angle reduces the ability for water to spread out over a hydrophobic surface: water drops rest only on the tops of the elevations and have only an extremely small contact area with the hydrophobic surface since they gather up into almost spherical beads. Drops are thereby repelled, and the surfaces remain dry after exposure to water.

Transparency and roughness are generally antinomic properties, and it is consequently difficult to find technical solutions for preparing optical surfaces that are both transparent and super-hydrophobic, without diffusion detrimental to good vision.

Known technologies to provide super-hydrophobic wetting properties usually tend to make the function permanent, the main objective being getting mechanical durability.

Further, when surfaces with super-hydrophobic wetting properties, which present a high roughness, are contaminated by dirt such as fingerprint, it is very difficult to remove the dirt with a simple wiping of the surface. The dirt tends to be located within the roughness, in particular in structures like nanoimprint of pillars or moth eyes.

Most of the known manufactured articles present unsatisfactory properties for certain applications, like optical applications. For example, some of them are not optically transparent or have high haze (low transmittance) in visible range; many nanoparticle films have poor adhesion to a substrate; porous sol-gel films have low mechanical properties or scratch resistance.

A nanostructured surface having antirain properties comprising nanopillars is disclosed, in particular in Patent Application WO 2017/025128 while a nanostructured surface comprising nanocavities is disclosed, in particular in Patent Application WO 2015/082948.

The application US 2008/304008 relates to an optical article coated with a ultra high hydrophobic nanostructured film having a surface roughness such that the film exhibits a static contact angle with water of at least 115°, said film comprising a first layer comprising nanoparticles bound by at least one binder adhering to the surface of the article and a second layer of an anti-fouling top coat at least partially coating said first layer.

The application WO 2015/177229 discloses a process for obtaining a permanent, durable and resistant super-hydrophobic coating comprising a step of depositing nanoparticles of different sizes on a surface, a step of cross-linking the surface thus textured with a cross-linking agent such as tetraethoxysilane and a step of depositing a layer of hydrophobic compound containing perfluorinated groups in order to make the surface super-hydrophobic. The nanoparticles can be prepared as raspberry-shaped nanoparticles having two-scale roughness, with small particles coating the surface of large particles. This multistep deposition process for obtaining a super-hydrophobic surface is rather complicated to implement.

The application US 2017/082783 describes a super-hydrophobic surface obtained by functionalizing a surface including nanostructures to provide hydroxyl groups and contacting the surface with a solution comprising a hydrophobic fluoropolymer for a time sufficient to apply at least a monolayer of fluorine-containing material.

The application KR 2009/0029360 discloses an optical lens comprising a super-hydrophobic surface coated with a peelable water-soluble polyurethane layer having a thickness of 1 to 20 µm for preventing the contamination from dust while preventing the degradation of the super-hydrophobic surface.

The application US 2018/099307 describes a transparent substrate comprising an antiglare film with reduced haze containing silica as its main component and a CF₃(CH₂)n-group where n is an integer of 1 to 6 and the antiglare film has an arithmetic mean surface roughness Ra of 0.01 µm or more. The antiglare film can be obtained from a liquid composition comprising trifluoropropyltrimethoxysilane and scaly silica particles, applied by a spray coating method.

The present invention has been made in view of the above mentioned problems, and it is an object of the present invention to prepare a nanostructured film with a very high hydrophobicity, exhibiting a surface roughness in conjunction with a low energy surface, in order to provide a hydrophilic surface with an antirain function, while keeping a very good level of transparency and low haze for clear vision. The antirain property should be sufficiently durable not to be degraded upon typical usage conditions, and should in particular resist rain droplets impacts.

However, it should also be easily removed by the user when antirain function is not needed anymore.

The user of the article should be provided with a solution to restore initial state when the film is contaminated with dirt.

Further, a multistep deposition process for obtaining a super-hydrophobic surface should be avoided.

To achieve one or more of the foregoing objects, and in accordance with the invention as embodied and broadly described herein, the inventors have defined a structure of the super-hydrophobic film, which is temporary but displays sufficient mechanical strength for the intended antirain usage. The inventive antirain treatment can be applied when the user needs it. When the antirain function is not needed anymore, the film can be easily removed, for example by rubbing with a cloth, and the initial hydrophilic property of the surface is recovered. This concept allows to play with two different functionalities on the same surface, for example if the surface on which the temporary film is deposited owned a specific functionality, such as antifog function.

Further, a key feature of the present invention is to deposit on the surface to be treated nanoparticles that have already been functionalized with a hydrophobic agent, to avoid several deposition steps to form a nanostructured super-hydrophobic film. The inventors have devised a one-pot formulation allowing for a one-step treatment of the surface.

To address the needs of the present invention and to remedy to the mentioned drawbacks of the prior art, the applicant provides an article having at least one surface that is at least partially coated with a nanostructured temporary super-hydrophobic film:
- having a static contact angle with water of at least 140°,
- preferably exhibiting multiple length scales of roughness,
- comprising nanoparticles functionalized with at least one hydrophobic agent, wherein the functionalization of the nanoparticles with said at least one hydrophobic agent has been performed before said nanostructured temporary super-hydrophobic film is coated on said surface,
- said surface exhibits a static contact angle with water of less than 60° before being at least partially coated with said nanostructured temporary super-hydrophobic film.

Preferably, the static contact angle with water of the temporary super-hydrophobic film is maintained at 140° or above after immersing the article for 30 seconds in deionized water.

In the present application, a coating that is "on" a substrate/coating or that has been deposited "on" a substrate/coating is defined as a coating which (i) is positioned above the substrate/coating, (ii) is not necessarily in contact with the substrate/coating, i.e., one or more intermediate coatings may be arranged between the substrate/coating and the coating in question (however, it is preferably in contact with said substrate/coating), and (iii) does not necessarily completely cover the substrate/coating. When "a layer 1 is located underneath a layer 2", it will be understood that layer 2 is farther from the substrate than layer 1. Similarly, a so-called "external" layer is farther from the substrate than a so-called "internal" layer.

A material surface is by definition herein considered hydrophobic when its static contact angle with water is higher than or equal to 60°, preferably higher than or equal to 80°. Typically, conventional hydrophobic surfaces have static contact angles with water ranging from 90° up to 120°. However, static contact angle with water may be equal to or higher than 130°, 135°, 140°.

A material surface is by definition herein considered hydrophilic when its static contact angle with water is lower than 60°, preferably lower than 50°, more preferably lower than 45°, 40°, 35°, 30°, 25°, 20°, 15° or 10°.

A material surface is considered super-hydrophobic in the present application when its static contact angle with water is equal to or higher than 140°, preferably higher than 145°, more preferably higher than 150°. Preferably, its sliding angle is lower than or equal to 20°, more preferably lower than or equal to 10°.

The "sliding angle," as used herein, is the tilt angle between the sample surface and the horizontal plane at which a liquid drop starts to slide off the sample surface under gravity influence.

The optical article prepared according to the invention comprises a substrate, preferably a transparent substrate, having generally front and back main faces, at least one of said main faces, preferably the front main face, comprises at least one surface that is at least partially coated with a nanostructured temporary super-hydrophobic film according to the invention.

The "back face" or "rear face" of the substrate (the back face is generally concave) is understood to be the face that, when the article is being used, is closest to the eye of the wearer/user. Conversely, the "front face" of the substrate (the front face is generally convex) is understood to be the face that, when the article is being used, is furthest from the eye of the wearer/user.

Although the article according to the invention can be any optical article capable of being confronted with the deposition of rain droplets, such as a screen, a window for the motor vehicle industry or the construction industry, solar panels, display systems, helmet visors, masks, or mirrors, it is preferably an optical lens, better still an ophthalmic lens, for spectacles, or a blank for an optical lens or ophthalmic lens.

This excludes articles, such as intraocular lenses in contact with living tissues or contact lenses, which are not intrinsically confronted with a problem of rain.

The substrate of the optical article can be a bare substrate, i.e., an uncoated substrate having a static contact angle with water of less than 60°, but is generally coated with one or more functional coatings.

The substrate of the optical article according to the invention can be a mineral or organic glass, for example an organic glass made of thermoplastic or thermosetting plastic.

Classes of substrates which are particularly preferred are poly(thiourethanes), polyepisulfides and the resins resulting from the polymerization or (co)polymerization of alkylene glycol bis(allyl carbonate)s. The latter are sold, for example, under the trade name CR-39® by PPG Industries (Orma® lenses, Essilor).

Specific examples of substrates suitable to the present invention are those obtained from thermosetting polythiourethane resins, which are marketed by the Mitsui Toatsu Chemicals company as MR series, in particular MR6®, MR7® and MR8® resins. These substrates as well as the monomers used for their preparation are especially described in the patents US 4,689,387, US 4,775,733, US 5,059,673, US 5,087,758 and US 5,191,055.

The surface of the optical article onto which the nanostructured temporary super-hydrophobic film is formed has a static contact angle with water of less than 60°, 50°, 45°, 40°, 35°, 30°, 25°, 20°, 15° or 10° (before being at least partially coated with said nanostructured temporary super-hydrophobic film). This water contact angle does preferably range from 15° to 40°, more preferably from 20° to 30°.

In the present application, the static contact angles can be determined by the liquid drop method, according to which a drop of liquid having a diameter of less than 2 mm (typically 20 µL for hydrophobic and hydrophilic surfaces and 4 µL for super-hydrophobic surfaces)) is deposited gently on a non-absorbent solid surface and the angle at the interface between the liquid and the solid surface is measured. Water has a conductivity between 0.3 µS and 1 µS at 25°C. Typically, measurements of static contact angle are performed with a DSA 100 apparatus (Drop Shape analysis system) from Kruss.

Optionally, surface activation by chemical or physical treatment (such as for example UV, ozone, plasma, acidic or basic surface treatment) can be performed before applying said film in order to decrease the static contact angle with water under 60°.

In a preferred embodiment, the surface that exhibits a static contact angle with water of less than 60° before being at least partially coated with said nanostructured temporary super-hydrophobic film is the surface of a precursor coating of an antifog coating.

It can also be the surface of another functional coating, for example a photocatalytic coating or a self cleaning coating based on TiO₂, having a static contact angle with water of less than 60°.

Application of antifog coating precursor coatings on optical articles is known. They are preferably formed on a coating comprising silanol groups on its surface.

According to the invention, the coating comprising silanol groups on its surface may be formed on at least one of the main surfaces of a bare substrate, that is to say a non coated substrate, or on at least one of the main surfaces of a substrate that has already been coated with one or more functional coatings.

These functional coatings conventionally used in optics may be, non-exhaustively, a layer of impact-resistant primer, an anti-abrasion and/or anti-scratch coating, a polarized coating, a photochromic coating or a colored coating, an interference coating, in particular a layer of impact-resistant primer coated with an anti-abrasion and/or anti-scratch layer.

The coating comprising silanol groups on the surface thereof is preferably deposited onto an abrasion-resistant and/or a scratch-resistant coating. The abrasion-resistant and/or scratch-resistant coating may be any layer traditionally used as an abrasion-resistant coating and/or scratch-resistant coating in the ophthalmic lenses field.

Coatings that are resistant to abrasion and/or to scratching are preferably hard coatings based on poly(meth)acrylates or silanes generally comprising one or more mineral fillers intended to increase the hardness and/or refractive index of the coating once hardened. (Meth)acrylate means an acrylate or a methacrylate.

Among the coatings recommended in the present invention, we may mention the coatings based on hydrolysates of epoxysilanes such as those described in patents EP 0614957, US 4,211,823 and US 5,015,523. The thickness of the anti-abrasion and/or anti-scratch coating is generally in the range from 2 to 10 µm, preferably from 3 to 5 µm.

Before depositing the anti-abrasion and/or anti-scratch coating, it is possible to deposit a primer coating on the substrate for improving the impact resistance and/or adhesion of the subsequent layers in the end product. These coatings may be any layer of impact resistant primer used conventionally for articles in transparent polymer, such as ophthalmic lenses, and are described in more detail in application WO 2011/080472.

The coating comprising silanol groups on the surface thereof will be described hereafter. As used herein, a coating comprising silanol groups on the surface thereof is intended to mean a coating which naturally comprises silanol groups on the surface thereof or a coating which silanol groups have been created after having been submitted to a surface activation treatment. This coating is therefore a coating based on siloxanes or silica, for example, without limitation, a silica-based layer, a sol-gel coating, based on organosilane species such as alkoxysilanes, or a coating based on silica colloids. It may be especially an abrasion-resistant coating and/or a scratch-resistant coating, or, according to the preferred embodiment, a monolayered antireflective coating or a multilayered antireflective coating which outer layer has silanol groups on the surface thereof. As used herein, the outer layer of a coating is intended to mean the layer that is the most distant from the substrate.

The surface activating treatment generating the silanol groups or at least increasing their proportion on the surface of a coating is generally performed under vacuum. It may be a bombardment with energetic and/or reactive species, for example with an ion beam ("Ion PreCleaning" or "IPC") or with an electron beam, a corona discharge treatment, an ion spallation treatment, an ultraviolet treatment or a plasma-mediated treatment under vacuum, generally using an oxygen or an argon plasma. It may also be an acidic or basic treatment and/or a solvent-based treatment (water, hydrogen peroxide or any organic solvent). Many of these treatments may be combined.

As used herein, energetic species (and/or reactive species) are intended to mean especially ionic species with an energy ranging from 1 to 300 eV, preferably from 1 to 150 eV, more preferably from 10 to 150 eV, and even more preferably from 40 to 150 eV. The energetic species may be chemical species such as ions, radicals or species such as photons or electrons.

The activating treatment may also be an acidic or a basic chemical surface treatment, preferably a wet treatment or a treatment using a solvent or a combination of solvents.

The coating comprising silanol groups on the surface thereof is preferably a low refractive index layer based on silicon oxide (comprising silicon oxide), preferably based on silica (comprising silica), most preferably it consists in a silica-based layer (SiO₂), generally obtained through vapor phase deposition.

Said layer based on SiO₂ may comprise, in addition to silica, one or more other materials traditionally used for making thin layers, for example one or more materials selected from dielectric materials described hereafter in the present specification. This layer based on SiO₂ is preferably free of Al₂O₃.

The inventors observed that it is not essential to carry out a surface treatment when the layer is a layer based on silica, particularly when obtained through evaporation.

The coating comprising silanol groups on the surface thereof preferably comprises at least 70% by weight of SiO₂, more preferably at least 80% by weight and even more preferably at least 90% by weight of SiO₂. As has already been noticed, in a most preferred embodiment, it comprises 100% by weight of silica.

The coating comprising silanol groups on the surface thereof may also be a sol-gel coating based on silanes such as alkoxysilanes, for example tetraethoxysilane or organosilanes such as γ-glycidoxypropyl trimethoxysilane. Such a coating is obtained through wet deposition, by using a liquid composition comprising a hydrolyzate of silanes and optionally colloidal materials with a high (> 1.55, preferably > 1.60, more preferably > to 1.70) or a low (≤ 1.55) refractive index. Such a coating which layers comprise an organic/inorganic hybrid matrix based on silanes wherein colloidal materials are dispersed to adjust the refractive index of each layer are described for example in the patent FR 2858420.

In one embodiment of the invention, the coating comprising silanol groups on the surface thereof is a layer based on silica deposited onto an abrasion-resistant coating, preferably deposited directly onto this abrasion-resistant coating.

Said layer based on silica (comprising silica) is preferably a silica-based layer, generally obtained through chemical vapor deposition. It has preferably a thickness lower than or equal to 500 nm, more preferably ranging from 5 to 20 nm, and even more preferably from 10 to 20 nm.

In another embodiment of the invention, which is the most preferred embodiment, the optical article according to the invention comprises an interferential coating. When such a coating is present, it generally represents the coating comprising silanol groups on the surface thereof within the meaning of the invention. This interferential coating may be, non-exhaustively, an antireflective coating, a reflecting (mirror) coating, an infrared filter, an antireflective coating at least partially cutting out blue light or an ultraviolet filter, preferably an antireflective coating. The interference coating is generally deposited on an anti-abrasion and/or anti-scratch coating.

The antireflective coating may be any antireflective coating traditionally used in the optics field, particularly ophthalmic optics, provided it comprises silanol groups on its surface.

An antireflective coating is defined as a coating, deposited on the surface of an article, which improves the anti-reflecting properties of the finished article. It makes it possible to reduce the reflection of light at the article-air interface over a relatively wide portion of the visible spectrum. Preferably Rv, the mean light reflectance value, is below 2.5% per face of the article.

Rv is as defined in standard ISO13666:1998 and is measured according to standard ISO 8980-4 (for an angle of incidence of the light below 17°, typically 15°). Preferably Rv<2%, better still Rv<1.5% and even better Rv<1%.

As is also well known, antireflective coatings conventionally comprise a monolayer or multilayer stack of dielectric materials. These are preferably multilayer coatings, comprising layers with high refractive index (HI) and layers with low refractive index (LI). The constitution of these coatings, their thickness and their method of deposition are notably described in application WO 2010/109154.

According to the invention, the coating comprising silanol groups on the surface thereof is directly in contact with the precursor coating of an anti-fog coating, which will be described hereunder.

As used herein, "a precursor of an anti-fog coating" is intended to mean a coating which, if a surfactant-containing liquid solution is applied on the surface thereof so as to form a film, represents an anti-fog coating within the meaning of the invention. The system precursor coating + surfactant-based solution film represent the anti-fog coating as such.

As used herein, an "anti-fog coating" is intended to mean a coating which, when a transparent glass substrate coated with such coating is placed under conditions generating fog onto said substrate being devoid of said coating, enables to immediately attain a visual acuity > 6/10 for an observer looking through a coated glass at a visual acuity scale located at a distance of 5 meters, typically the Snellen E visual acuity scale (ARMAIGNAC scale (Tridents), ref. T6 available from FAX INTERNATIONAL).

A test to evaluate the antifogging properties of a coating is described in the experimental section. Under fog generating conditions, anti-fog coatings may either not present fog on their surface (ideally no visual distortion, or visual distortion but visual acuity > 6/10 under the hereabove mentioned measurement conditions), or may present some fog on their surface but yet enable, despite the vision perturbation resulting from fog, a visual acuity > 6/10 under the hereabove mentioned measurement conditions. A non-anti-fog coating does not allow a visual acuity > 6/10 as long as it is exposed to conditions generating fog and generally presents a condensation haze under the hereabove mentioned measurement conditions.

As used herein, an "anti-fog article" is intended to mean an article provided with an "anti-fog coating" such as defined hereabove.

Thus, the anti-fog coating precursor according to the invention, which is a hydrophilic coating, is not considered as being an anti-fog coating according to the present invention, even if it has some anti-fogging properties, which may be observed for example by means of a breath test described in WO 2011/080472. Indeed, this antifog coating precursor does not allow to obtain a visual acuity > 6/10 under the hereabove mentioned measurement conditions.

As used herein, a temporary anti-fog coating is intended to mean an anti-fog coating obtained after having applied a liquid solution comprising at least one surfactant onto the surface of a precursor coating of said anti-fog coating. The durability of a temporary anti-fog coating is generally limited by the wiping operations performed on the surface thereof, the surfactant molecules being not permanently attached to the surface of the coating but just adsorbed for a more or less durable period of time. By contrast, a permanent antifog coating is intended to mean a coating which hydrophilic properties result from hydrophilic compounds permanently bound to another coating or support.

In one embodiment, the surface of the optical article onto which the nanostructured temporary super-hydrophobic film is formed is the surface of a coating obtained through the grafting of at least one organosilane compound having a polyoxyalkylene group comprising preferably less than 80 carbon atoms, and at least one silicon atom bearing at least one hydrolyzable group.

The anti-fog coating precursor coating is a coating having generally a thickness lower than or equal to 10 nm, preferably 5 nm or less, more preferably 4 nm or less, better 3 nm or less and even better 2 nm or less, possessing preferably a static contact angle with water of more than 10° and of less than 60°, which is obtained through a permanent grafting of at least one organosilane compound possessing a polyoxyalkylene group and at least one silicon atom bearing at least one hydrolyzable group.

In one embodiment of the invention, the coating is deposited by applying a composition comprising a hydrolyzate of the organosilane compound possessing a polyoxyalkylene group and at least one silicon atom carrying at least one hydrolyzable group.

The organosilane compound used is capable, thanks to its silicon-containing reactive group, to establish a covalent bond with the silanol groups present onto the surface of the coating onto which it is deposited.

The organosilane compound of the invention comprises a polyoxyalkylene chain functionalized at only one end or at both ends thereof, preferably at only one end, by a group comprising at least one silicon atom carrying at least one hydrolyzable group. This organosilane compound comprises preferably a silicon atom carrying at least two hydrolyzable groups, preferably three hydrolyzable groups. Preferably, it does not comprise any urethane group. It is preferably a compound of formula:

R¹YₘSi(X)₃₋ₘ (A)

wherein the groups Y, being the same or different, are monovalent organic groups bound to the silicon atom through a carbon atom, the groups X, being the same or different, are hydrolyzable groups, R¹ is a group comprising a polyoxyalkylene function, m is an integer equal to 0, 1 or 2. Preferably m = 0.

The X groups are preferably selected from alkoxy groups -O-R³, particularly C₁-C₄ alkoxy groups, acyloxy groups -O-C(O)R⁴ where R⁴ is an alkyl radical, preferably a C₁-C₆ alkyl radical, preferably a methyl or an ethyl, halogens such as CI, Br and I or trimethylsilyloxy (CH₃)₃SiO-, and combinations of these groups. Preferably, the groups X are alkoxy groups, and particularly methoxy or ethoxy groups, and more preferably ethoxy groups.

The Y group, present when m is not zero, is preferably a saturated or unsaturated hydrocarbon group, preferably a C₁-C₁₀ and more preferably a C₁-C₄ group, for example an alkyl group, such as a methyl or an ethyl group, a vinyl group, an aryl group, for example an optionally substituted phenyl group, especially substituted by one or more C₁-C₄ alkyl groups. Preferably Y represents a methyl group.

In a preferred embodiment, the compound of formula (A) comprises a trialkoxysilyl group such as a triethoxysilyl or a trimethoxysilyl group.

The polyoxyalkylene group of the organosilane compound (group R¹) comprises preferably less than 80 carbon atoms, more preferably less than 60 carbon atoms, and even more preferably less than 50 carbon atoms. The group R¹ preferably satisfies the same conditions.

The group R¹ corresponds generally to the formula -L-R^{2.} where L is a divalent group bound to the silicon atom of the compounds of formula (A) or (B) through a carbon atom, and R² is a group comprising one polyoxyalkylene group bound to the group L through an oxygen atom, this oxygen atom being included in the group R². Non limiting examples of L groups include linear or branched, optionally substituted alkyl, cycloalkylene, arylene, carbonyl, amido groups, or combinations of these groups like cycloalkylenealkylene, biscycloalkylene, biscycloalkylenealkylene, arylenealkylene, bisphenylene, bisphenylenealkylene, amido alkylene groups, amongst which for example the group CONH(CH₂)₃, or -OCH₂CH(OH)CH₂- and - NHC(O)- groups. Preferred groups L are alkyl groups (preferably linear), having preferably 10 carbon atoms or less, more preferably 5 carbon atoms or less, for example ethylene and propylene groups.

Preferred groups R² comprise a polyoxyethylene group -(CH₂CH₂O)ₙ-, a polyoxypropylene group, or combinations of these groups.

The preferred organosilanes of formula (A) are compounds of following formula (B):

Yₘ(X)₃₋ₘSi(CH₂)_{n'}-(L')_{m'}-(OR)ₙ-O-(L")_{m"}-R' (B)

where R' is a hydrogen atom, a linear or branched acyl or alkyl group, optionally substituted by one or more functional groups, and which may furthermore comprise one or more double bonds, R is a linear or branched alkylene group, preferably linear, for example an ethylene or a propylene group, L' and L" are divalent groups, X, Y and m are such as defined hereabove, n' is an integer ranging from 1 to 10, preferably from 1 to 5, n is an integer ranging from 2 to 50, preferably from 5 to 30, more preferably from 5 to 15, m' is 0 or 1, preferably 0, m" is 0 or 1, preferably 0.

The groups L' and L", when present, may be selected from divalent groups L previously described and represent preferably the group -OCH₂CH(OH)CH₂- or the group -NHC(O)-. In this case, the groups -OCH₂CH(OH)CH₂- or -NHC(O)- are linked to the adjacent groups (CH₂)_{n'} (with a group L') and R' (with a group L") through their oxygen atom (for the group - OCH₂CH(OH)CH₂-) or through their nitrogen atom (for the group -NHC(O)-).

In one embodiment, m = 0 and the hydrolyzable groups X represent methoxy or ethoxy groups. n' is preferably 3. In another embodiment, R' represents an alkyl group possessing less than 5 carbon atoms, preferably a methyl group. R' may also represent an aliphatic or aromatic acyl group, especially an acetyl group.

Lastly, R' may represent a trialkoxysilylalkylene group or a trihalogenosilylalkylene group such as a group -(CH₂)_{n"}Si(R⁵)₃ where R⁵ is a hydrolyzable group such as the previously defined groups X and n" is an integer such as the previously defined n' integer. An example of such a group R' is the group -(CH₂)₃Si(OC₂H₅)₃. In this embodiment, the organosilane compound comprises two silicon atoms carrying at least one hydrolyzable group.

In preferred embodiments, n is 3, or does range from 6 to 9, from 9 to 12, from 21 to 24, or from 25 to 30, preferably from 6 to 9.

To be mentioned as suitable compounds of formula (B) are for example 2-[methoxy(polyethyleneoxy)propyl]trimethoxysilane compounds of formulae CH₃O-(CH₂CH₂O)₆₋₉-(CH₂)₃Si(OCH₃)₃ (C) and CH₃O-(CH₂CH₂O)₉₋₁₂-(CH₂)₃Si(OCH₃)₃ (IV), marketed by Gelest, Inc. or ABCR, the compound of formula CH₃O-(CH₂CH₂O)₃-(CH₂)₃Si(OCH₃)₃ (VIII), compounds of formula CH₃O-(CH₂CH₂O)ₙ-(CH₂)₃Si(OC₂H₅)₃ where n= 21-24, 2-[methoxy(polyethyleneoxy)propyl] trichlorosilanes, 2-[acetoxy(polyethyleneoxy)propyl] trimethoxysilane of formula CH₃C(O)O-(CH₂CH₂O)₆₋₉-(CH₂)₃Si(OCH₃)₃, 2-[acetoxy(polyethyleneoxy)propyl] triethoxysilane of formula CH₃C(O)O-(CH₂CH₂O)₆₋₉-(CH₂)₃Si(OC₂H₅)₃, 2-[hydroxy(polyethyleneoxy)propyl]trimethoxysilane of formula HO-(CH₂CH₂O)₆₋₉-(CH₂)₃Si(OCH₃)₃, 2-[hydroxy(polyethyleneoxy)propyl]triethoxysilane of formula HO-(CH₂CH₂O)₆₋₉-(CH₂)₃Si(OC₂H₅)₃, compounds of formulas HO-(CH₂CH₂O)₈₋₁₂-(CH₂)₃Si(OCH₃)₃ and HO-(CH₂CH₂O)₈₋₁₂-(CH₂)₃Si(OC₂H₅)₃, polypropylene-bis[(3-methyldimethoxysilyl)propyl] oxide, and compounds with two siloxane heads such as polyethylene-bis[(3-triethoxysilylpropoxy)-2-hydroxypropoxy] oxide of formula (V), polyethylene-bis[(N,N'-triethoxysilylpropyl)-aminocarbonyl] oxide of formula (VI) with n = 10-15 and polyethylene-bis(triethoxysilylpropyl) oxide of formula (VII):

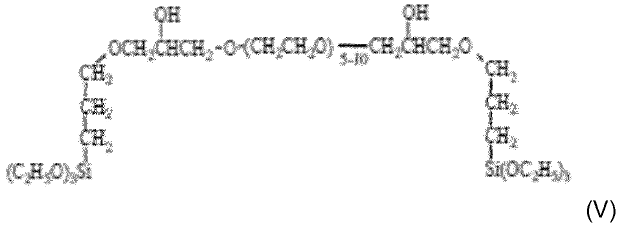

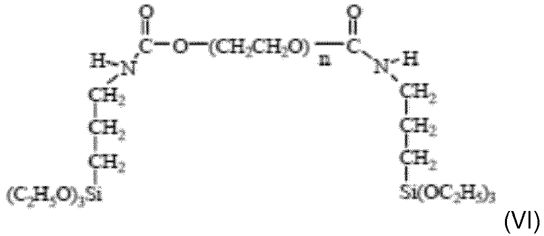

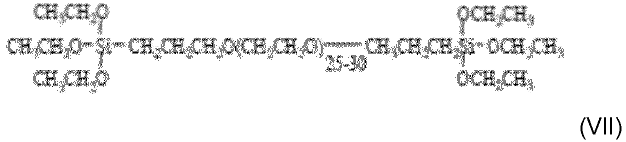

Preferred compounds of formula (B) are [alkoxy(polyalkylenoxy)alkyl]trialkoxysilanes or their trihalogenated analogues (m = m' = m" = 0, R' = alkoxy).

Preferably, the organosilane compound of the invention has no fluorine atom. Typically, the weight amount of fluorine in the antifog coating precursor coating is of less than 5%, preferably of less than 1% and more preferably of 0%.

Preferably, the molecular weight of the organosilane compound according to the invention does range from 400 to 4000 g/mol, preferably from 400 to 1500 g/mol, more preferably from 400 to 1200 g/mol, and even more preferably from 400 to 1000 g/mol.

Of course it is possible to graft a mixture of compounds of formula (A) or (B), for example a mixture of compounds with different polyoxyalkylene RO chain lengths.

In one embodiment of the invention, the anti-fog coating precursor comprises more than 80% by weight of an organosilane compound according to the invention, relative to the anti-fog coating precursor total weight, preferably more than 90%, more preferably more than 95% and most preferably more than 98%. In one embodiment, the antifog coating precursor consists in a layer of said organosilane compound.

The antifog precursor coatings according to the invention are preferably of an organic nature. "Layer of an organic nature" means a layer comprising a non-zero proportion by weight, preferably of at least 40%, better still at least 50% of organic materials relative to the total weight of the layer.

The deposition of the organosilane compound onto the surface of the coating comprising silanol groups may be carried out according to usual procedures, preferably by gas phase deposition or liquid phase deposition, most preferably in the gas phase, by evaporation under vacuum.

When the grafting is carried out in the gas phase, for example by evaporation under vacuum, it may be followed, if needed, with a step for removing the excess of the deposited organosilane compound so as to retain only the organosilane compound that is really grafted onto the surface of the silanol group-containing coating. Non grafted molecules are thus removed. Such a removal step should be especially performed when the thickness of the anti-fog coating precursor initially deposited is higher than 5 nm.

Deposition of antifog coating precursor coatings and formation of a temporary anti-fog coating by depositing a film of a liquid solution comprising at least one hydrophilic compound such as a surfactant onto the surface of the anti-fog coating precursor coating are described in detail in the application US 2012/019767. This solution provides the article with an anti-fog temporary protection by creating on their surface a uniform layer that contributes to disperse the water droplets on the article surface so that they do not form any visible fog.

The temporary film used in the context of the invention is generally formed from a coating composition comprising nanoparticles functionalized with at least one hydrophobic agent, and optionally further comprising at least one binder. These nanoparticles form assemblies that are the source of the nanometer scale roughness created on the surface treated. This surface morphology with high roughness provides super-hydrophobic properties due to the fact that the nanoparticles are further treated with a hydrophobic compound.

In the context of the present invention, the expression "nanostructured surface" relates to a surface covered with nano-sized structures, i.e., with a degree of surface roughness where the dimensions of the features on the surface are in the range of the nanometer. Said nano-sized structures have one dimension on the nanoscale, i.e., ranging from 1 to 1000 nm, preferably ranging from 1 to 500 nm, more preferably ranging from 1 to less than 250 nm, even better ranging from 1 to 100 nm.

As used herein, the term "nanoparticles" is intended to mean solid particles of which the majority has a size higher than or equal to 1 nm but inferior to 1 µm. Nanoparticles may be spherical or non spherical, elongated, even nanocrystals. The nanoparticles may be bound, adhered to, and/or dispersed throughout the hydrophobic agent.

In the framework of this invention, the particle size is its diameter if the particle is spherical and its highest length if the particle is not spherical (length of the primary axis of the nanoparticles, which is defined as the longest straight line that can be drawn from one side of a particle to the opposite side). Processes for determining the particle size include BET adsorption, optical or scanning electron microscopy, or atomic force microscopy (AFM) imaging.

For applications such as ophthalmic optics, the nanoparticles used have such a size that they do not significantly influence the transparency of the film. Actually, big nanoparticles provide a surface having higher hydrophobicity, but also higher haze.

Preferably, the nanoparticles used in the inventive super-hydrophobic film have an average particle size (or average diameter) of less than or equal to 200 nm, more preferably less than or equal to 150 nm, even more preferably less than or equal to 100 or 70 nm. Nanoparticles, which majority has an average particle size (or average diameter) of less than or equal to 40 nm are also useful. Preferably, the nanoparticles have an average particle size (or average diameter) higher than or equal to 10 nm. It is preferred that all nanoparticles satisfy these conditions.

In a preferred embodiment, the super-hydrophobic film comprises nanoparticles having an average particle size (or average diameter) ranging from 10 to 200 nm, 50 to 200 nm or 20 to 150 nm, preferably from 20 to 100 nm or 40 to 100 nm.

Nanoparticles may be organic, inorganic, or a mixture of both can be used. The nanoparticles can be made of at least one metal, at least one metal oxide, at least one metal nitride, at least one metal fluoride, or at least one polymer. Preferably, inorganic nanoparticles are used, especially metal oxide, metal nitride or metal fluoride nanoparticles, or mixtures thereof. In the context of the present invention, metal compounds include metalloid compounds. For example, metalloid oxides are considered to be metal oxides. Alloys, ceramics or composites containing carbon can also be used.

Suitable inorganic nanoparticles are for example nanoparticles of aluminum oxide Al₂O₃, silicon oxide SiO or SiO₂, zirconium oxide ZrO₂, titanium oxide TiO₂, antimony oxide, tantalum oxide Ta₂O₅, zinc oxide, tin oxide, indium oxide, cerium oxide, Si₃N₄, MgF₂ or their mixtures. It is also possible to use particles of mixed oxides. Using different types of nanoparticles allows making hetero-structured nanoparticles layers. Preferably, the nanoparticles are particles of aluminum oxide, zirconium oxide or silicon oxide SiO₂, more preferably SiO₂ nanoparticles.

Suitable organic nanoparticles are for example nanoparticles of polymers such as polycarbonate, polyethylene terephthalate (PET), polymethyl methacrylate (PMMA), polystyrene, polyethylene, polyester, polyacrylic acid (PAA), polymethacrylic acid, polyacrylamide (PAM), poly(alkyl acrylate) such as polymethyl acrylate (PMA), polyethyl acrylate (PEA), polybutyl acrylate (PBA).

For applications in which the transparent properties must be maintained after treatment, nanoparticles the refractive index of which is close to that of the material to be coated will be preferred.

Particularly useful nanoparticles are those having reactive groups attached to them that are capable of establishing at least one intermolecular bond or interaction with the hydrophobic agent, preferably a covalent bond. Reactive groups can be originally present in the structure of nanoparticles, for example hydroxyl groups (silanols) in SiO₂ nanoparticles that are capable of binding with a large variety of compounds such as silicon-containing compounds. However, the present invention also encompasses the case when new reactive groups are created at the surface of the nanoparticles, for example by chemical grafting. Examples of reactive groups which may be created are, without limitation, ethylenically unsaturated groups such as (meth)acrylate or vinylic groups, epoxides, isocyanates, silanes, siloxanes, silicates, thiols, alcohols. In some cases, reactive groups of the nanoparticles or functionalized nanoparticles are capable of cross-linking with the binder and/or hydrophobic agent.

Nanoparticles which undergo the preliminary surface modification by grafting a hydrophobic agent may be nanoparticles with or without existing reactive groups.

In a preferred embodiment, the nanoparticles comprise silanol groups at their surface, which can react with functional groups of the hydrophobic agent and/or binder, such as isocyanate groups. An example of such reaction is the formation of covalent bonds between those silanol groups and hydrolyzates of organic alkoxysilanes.

The nanoparticles that are present in the nanostructured temporary super-hydrophobic film are functionalized with at least one hydrophobic agent, and the functionalization with said at least one hydrophobic agent has been performed before said nanostructured temporary super-hydrophobic film has been coated on the surface of the article.

Coating the surface of the nanoparticles with a layer of hydrophobic agent will make the surface of the resulting film super-hydrophobic.

The functionalization of the nanoparticles with the hydrophobic agent may be carried out by various methods in liquid or vapor phase, for example evaporation techniques well-known to persons skilled in the art (PVD, CVD). The functionalization is generally a grafting of the hydrophobic agent on the nanoparticles.

In a preferred embodiment, the functionalization is performed in liquid phase. The hydrophobic agent may be advantageously dissolved in or diluted with a solvent or directly added to a suspension of nanoparticles in an appropriate solvent, in excess ratio. Then, the excess hydrophobic agent that has not reacted with the nanoparticles can be eliminated from the suspension by successive centrifugation/solvent removal/addition of pure solvent steps, leading to a stable suspension of functionalized nanoparticles that can be deposited onto the surface of the article having a static contact angle with water of less than 60°.

The hydrophobic agent is preferably an organic compound, and bears at least one hydrophobic group.

As used herein, "hydrophobic groups" are intended to mean combinations of atoms that are not prone to association with water molecules, especially through hydrogen bonding. These are typically non polar organic groups, with no charged atoms. Alkyl, phenyl, fluoroalkyl, perfluoroalkyl, (poly)fluoro alkoxy[(poly)alkylenoxy] alkyl, trialkylsilyloxy groups and hydrogen atom are therefore included in this category.

The hydrophobic agent can be a polymer, for example polyethylene or polystyrene, which are preferably partially or totally fluorinated, such as for example polytetrafluoroethylene, polyvinylidene fluoride or perfluoropolyethers.

In a first preferred embodiment, the hydrophobic agent is a compound of formula (I):

R_{F,H}-A-L (I)

Compounds (I) have a fluorinated functional moiety R_{F,H} on one side, and a linking functional moiety L on the other side, both being connected by the linking arm A.

R_{F,H}, which provides a hydrophobic property to the nanoparticles, is preferably a linear or branched perfluoroalkyl, perfluorooxyalkyl, perfluoroalkylthio, fluoroalkyl (which means an alkyl group comprising at least one fluorine atom), fluorooxyalkyl, fluoroalkylthio group or a combination thereof. R_{F,H} may be polymeric, oligomeric or monomeric. Thus, R_{F,H} may be a fluoropolyether or a perfluoropolyether group. R_{F,H} is preferably oligomeric or monomeric. Preferred R_{F,H} groups are perfluoroalkyl or fluoroalkyl groups, preferably those which can be represented by the following general formula: 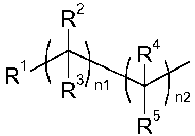 in which R¹ represents a trifluoromethyl, a difluoromethyl, a fluoromethyl or a methyl group, R² to R⁵ each independently represent a fluorine or an hydrogen atom, n₁ and n₂ each independently represent an integer ranging from 0 to 10. An example of fluoroalkyl group is hexafluoro-2-propyl group. Preferred R_{F,H} groups have 1 to 25 carbon atoms, more preferably 10 to 22, still more preferably 15 to 20.

In a preferred embodiment, R_{F,H} is a linear group. R_{F,H} is preferably a perfluorooxyalkyl group such as -(CF(CF₃)CF₂O)ₙ-CF₂-CF₂-CF₃, -(CF₂CF(CF₃)O)ₙ-CF₂-CF₂-CF₃, -(CF₂CF₂CF₂O)ₙ-CF₂-CF₂-CF₃, -(CF₂CF₂O)ₙCF₂-CF₃, -CF(CF₃)-O-(CF(CF₃)CF₂O)ₙ-CF₂-CF₂-CF₃, -CF(CF₃)-O-(CF₂CF(CF₃)O)ₙ-CF₂-CF₂-CF₃, -CF(CF₃)-O-(CF₂CF₂CF₂O)ₙ-CF₂-CF₂-CF₃, -CF₂-O-(CF₂CF₂O)ₙ-CF₂-CF₃, wherein n is an integer ranging from 1 to 50, preferably from 2 to 10, more preferably from 3 to 6. Other useful R_{F,H} groups include CH₃-CH=CF-C₅F₁₀-C₂H₄- and CₚF₂ₚ₊₁ groups in which p is an integer ranging from 1 to 50, preferably from 2 to 10, more preferably from 3 to 6, such as trifluoromethyl, pentafluoroethyl, heptafluoro-n-propyl, nonafluoro-n-butyl, n-C₅F₁₁, n-C₆F₁₃, n-C₇F₁₅ and n-C₈F₁₇.

In general formula (I), A is a divalent group, including a covalent link. A is called "linking arm", or "linker group", the role of which being to connect R_{F,H} groups to linking functional moieties L. The linking arm may be polymeric, oligomeric or monomeric, preferably oligomeric or monomeric. Divalent linking arms may be selected from, without limitation:
- alkylene groups, linear or branched, substituted or not substituted;
- cycloalkylene groups, substituted or not substituted;
- alkenylene or alkynylene groups, substituted or not substituted;
- divalent heteroarylene groups, substituted or not substituted;
- arylene groups, substituted or not substituted;
- acyl(cyclo)alkylene groups, acyl(cyclo)alkenylene groups, acyl(cyclo)alkynylene groups, acyl(cyclo)arylene groups, the acyl function being -C(O)-;
- acyloxy(cyclo)alkylene groups, acyloxy(cyclo)alkenylene groups, acyloxy(cyclo)alkynylene groups, acyloxy(cyclo)arylene groups, the acyloxy function being -C(O)O-;
- oxy(cyclo)alkylene groups, oxy(cyclo)alkenylene groups, oxy(cyclo)alkynylene groups, oxy(cyclo)arylene groups;
- thio(cyclo)alkylene groups, thio(cyclo)alkenylene groups, thio(cyclo)alkynylene groups, thio(cyclo)arylene groups, sulfo (-SO₂-) derivatives thereof, sulfoxy (-S(O)-) derivatives thereof;
- amino(cyclo)alkylene groups, amino(cyclo)alkenylene groups, amino(cyclo)alkynylene groups, amino(cyclo)arylene groups;
- alkylamino(cyclo)alkylene groups, alkylamino(cyclo)alkenylene groups, alkylamino(cyclo) alkynylene groups, alkylamino(cyclo)arylene groups;
- arylamino(cyclo)alkylene groups, arylamino(cyclo)alkenylene groups, arylamino(cyclo) alkynylene groups, arylamino(cyclo)arylene groups;
- NRC(O) in which R is a hydrogen atom or a C₁-C₁₀ alkyl group, preferably a hydrogen atom, OC(O), C(O), NHS(O)₂, NHS(O), OC(O)OC(O), C(O)C(O) groups, which may be connected to R_{F,H} groups as defined below: 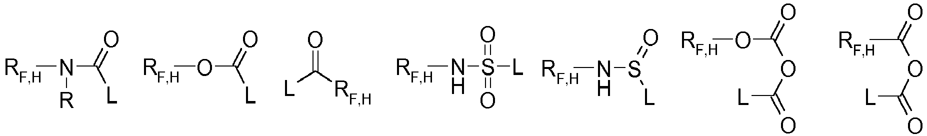 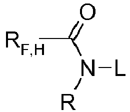
- diorganosilylene groups, optionally substituted with an alkylene, arylene, alkenylene or alkynylene group;
or combinations of groups from the same or a different category, for example cycloalkylene-alkylene groups, biscycloalkylene groups, biscycloalkylene-alkylene groups, arylene-alkylene groups, biaryl groups, bisphenylene-alkylene groups, oxyalkenyl-alkylene groups, arylene-alcoxylene groups, C(O)NH-alkylene groups.

Examples of arylene, heteroarylene, aralkyl, alkylene, cycloalkylene, cycloalkylene-alkylene, biscycloalkylenealkylene, arylene-alkylene, bisphenylene-alkylene, alkenylene, alkynylene, oxyalkylene, diorganosilylene groups and substituents for divalent linking arms are given in WO 2007/071700, which is herby incorporated by reference.

In a preferred embodiment of the invention, the linking arm A is a group of formula (O)CNHCH₂ₙ₊₁, where n is an integer ranging from 1 to 10, preferably the (O)CNHCH₂CH₂CH₂ group (connected to the linking functional moiety L through its alkylene group).

In general formula (I), L is a chemical moiety, called "linking functional moiety" or "linking moiety", which is capable of forming at least one intermolecular bond or interaction with the nanoparticles. L promotes the adhesion of the hydrophobic agent to the surface of the nanoparticles, preferably though a covalent bond following a chemical reaction with a chemical group present at the surface of the nanoparticles.

Non-limiting examples of L groups are: 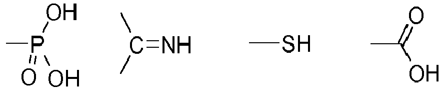 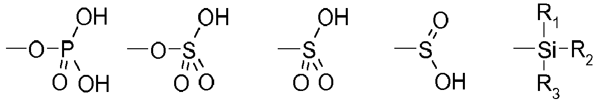 in which R¹, R² and R³, being the same or different, represent hydrolyzable groups including an OH group, preferably chosen from alkoxy groups -O-R, in particular C₁-C₄ alkoxy, acyloxy groups -O-C(O)R, wherein R is an alkyl group, preferably a C₁-C₆ alkyl groups such as methyl or ethyl, and halogens such as CI, Br and I. These are preferably alkoxy groups, especially methoxy or ethoxy, and more preferably ethoxy groups. L is preferably a SiR¹R²R³ group.

The hydrophobic agent is preferably an organosilane compound, in particular an alkoxysilane, bearing at least one hydrophobic group connected to the silicon atom directly or through a non-hydrolyzable group, preferably through a carbon atom. In a preferred embodiment, the hydrophobic agent is an organosilane comprising at least one fluorinated group connected to the silicon atom through a carbon atom and at least one silicon atom bearing at least one hydrolyzable group. Said fluorinated group is preferably a perfluoropolyether or fluoropolyether group. In the present application, an organosilane is any organic derivative of a silane containing at least one carbon to silicon bond.

The preferred compound of formula (I) has the following structure (la), in which R represents a linear or branched C1-C4 alkyl group, preferably methyl (formula Ib):

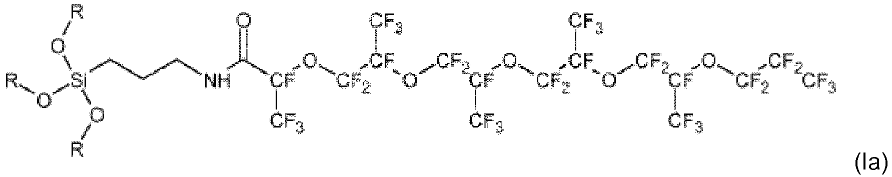

Another preferred compound of formula (I) is CH₃-CH=CF-C₅F₁₀-C₂H₄-Si(OC₂H₅)₃ of formula (Ic).

Further examples of hydrophobic agents are fluoroalkyl alkoxysilanes, such as fluoroalkyl trialkoxysilanes, for example 3,3,3-trifluoropropyltrimethoxysilane of formula CF₃CH₂CH₂Si(OCH₃)₃, fluoroalkyl chlorosilanes, especially a tri(fluoroalkyl)chlorosilane or a fluoroalkyl dialkyl chlorosilane such as 3,3,3-trifluoropropyldimethyl chlorosilane of formula CF₃-CH₂-CH₂-Si(CH₃)₂Cl, fluoroalkyl dialkyl alkoxysilanes.

When the nanoparticles have a silica-based matrix comprising silanol groups, the hydrophobic agent reacts with the silanol groups and a treatment with this compound leads to a silica matrix, at least part of the silanol groups of which has been derivatized to hydrophobic groups.

It is possible to use the hydrophobic agent in a large excess as compared to the number of silanol groups to be grafted, in order to accelerate the reaction.

The hydrophobic agent is comprised in the nanostructured temporary super-hydrophobic film in an amount preferably ranging from 10 to 50 % by weight, relative to the total weight of the film, more preferably from 20 to 40 % by weight.

In a particularly preferred embodiment of the invention, the nanostructured film exhibits multiple length scales of roughness, i.e., possesses more than one degree of roughness, so as to improve the hydrophobic properties. Films in which all nanoparticles have the same size or in which the sizes of the nanoparticles are different but belong to a narrow size range possess only one degree of roughness. Means of achieving multiple length scales of roughness are very diverse and only a few will be presented in the present disclosure, to which the invention is not limited.

A first manner of achieving this goal is using a coating composition comprising a mixture of functionalized nanoparticles with multiple length scales (i.e., multiple size ranges). Obviously, average size of the different samples of nanoparticles employed must be sufficiently different to reach different scales of roughness. In this embodiment, the temporary super-hydrophobic film comprises at least two nanoparticle populations of different size ranges. For example, mixtures of nanoparticles having an average size of 10-15 nm and nanoparticles having an average size of 40-50nm can be used.

In this embodiment, at least two nanoparticle populations of different sizes are deposited concomitantly on the surface to be treated, and the two populations are not agglomerated with each other.

The expression "nanoparticle population" is understood to mean, in the context of the present invention, a set of nanoparticles of the same size or of similar size, i.e., having the same shape and a homogeneous size. In practice, the average diameter of the nanoparticles within the same population follows a Gaussian distribution which may vary by at most 30 %.

In the present application, the at least two nanoparticle populations of different sizes may each be made of different materials (silica and a polymer, for example). However, in a preferred embodiment, the at least two nanoparticle populations of different sizes are all made of the same material.

In a most preferred embodiment, the at least two nanoparticle populations of different size ranges comprise a first nanoparticle population having an average diameter ranging from 40 to 100 nm, and a second nanoparticle population having an average diameter ranging from 5 to less than 40 nm.

A second manner of achieving multiple length scales of roughness is depositing successively several coating compositions comprising functionalized nanoparticles with different sizes or different size ranges. It is not necessary to deposit the nanoparticle populations in the order of decreasing size on the surface to be treated. Smaller nanoparticles may be deposited before bigger ones.

The different nanoparticle layers deposited can optionally be coated with a binder for increasing the affinity of the particles with the surface and/or of the nanoparticles with one another.

In a preferred embodiment, the nanoparticle population deposited first has an average diameter ranging from 40 nm to 100 nm, and the nanoparticle population deposited second has an average diameter ranging from 5 nm to less than 40 nm.

A third manner of achieving this goal is using nanoparticles having themselves multiple length scales of roughness, preferably a double-scale of roughness.

Preferred nanoparticles having multiple length scales of roughness are the so-called "raspberry" nanoparticles.

These "raspberry" nanoparticles consist of large nanoparticles on the surface of which smaller nanoparticles are bound (preferably in a single layer). They thus consist of at least two nanoparticle populations of different size ranges within the meaning of the present application, preferably two, one substantially larger than the other.

In other words, when two populations of nanoparticles are used, the nanoparticles comprise a core nanoparticle having an average diameter D1 and nanoparticles having an average diameter D2, which adhere, preferably by grafting, to said core nanoparticle, with D2 < D1. In this embodiment, the average diameter of the raspberry nanoparticle is D1 + 2 x D2.

Contrary to the first two embodiments described above, the nanoparticles of different sizes are not isolated but rather agglomerated, preferably by covalent grafting of particles onto each other.

As previously, it is preferred to use at least two nanoparticle populations of different size ranges, a first one having an average diameter ranging from 40 to 100 nm, and a second one having an average diameter ranging from 5 to less than 40 nm.

Ideally, the ratio of the average diameter of the larger particles D1 to the average diameter of the smaller particles D2 preferably ranges from 2 to 30, more preferably from 3 to 10. For example, nanoparticles having average diameters of 50 and 15 nm are used in the experimental part.

In the present invention, raspberry nanoparticles are prepared before being contacted with the surface to be treated. In a first step i), a first nanoparticle population is coated with an adhesion agent, then this first population is contacted with one or more other nanoparticle population(s) so as to form raspberry nanoparticles (step ii). The raspberry particles thus formed are optionally purified (step iii), treated with at least one hydrophobic agent (step iv) and then deposited on the surface to be treated (step v), said surface having been optionally activated and/or pretreated as described above.

Optionally, the nanoparticles obtained after step iii) may be treated again with an adhesion agent as during step i), then contacted with one or more other nanoparticle populations as during step ii) and optionally re-purified, as during step iii). These operations may be repeated as many times as necessary in order to obtain raspberry nanoparticles of the desired size and roughness.

In a preferred embodiment, the treatment of the nanoparticles with an adhesion agent during step i) is carried out either by vacuum deposition (such as evaporation), or by spraying a solution, or by dipping in a solution.

In the case of vacuum deposition, the nanoparticles may be placed in an enclosure under reduced pressure in the presence of an adhesion agent, for 1 minute to 24 hours, preferentially for 5 minutes to 10 hours, more preferentially for 10 minutes to 2 hours, the pressure in the enclosure being for example between 1 and 100 mbar, preferentially between 5 and 30 mbar.

In the case of a reaction in solution, the adhesion agent may be dissolved in a suitable solvent, at a concentration between 10⁻⁵ mol/L and 1 mol/L, preferentially between 10⁻³ and 10⁻¹ mol/L. The nanoparticle population, preferably the one having the bigger size, may then be immersed in the solution containing the adhesion agent for 1 to 24 hours (or the adhesion agent is added to a dispersion of the nanoparticles), then rinsed with the solvent and heated under vacuum for 2-6 hours at 40-60°C. The resulting nanoparticle population may then be dispersed in a suitable solvent. Alternatively, the nanoparticles may be kept as a dispersion without drying step. To this suspension, at least one nanoparticle population is added. This mixture may be dispersed ultrasonically and heated at reflux overnight.

In step ii), the contact between the nanoparticles is preferably a grafting, and covalent bonds are preferably created between the nanoparticle population of different sizes by means of the adhesion agent, generating agglomerates of nanoparticles called "raspberries".

The adhesion agent can be chosen from the binders previously described in the present application. It is preferably a silane isocyanate such as 3-(trimethoxysilyl)propyl isocyanate or 3-(trimethoxysilyl)propyl isocyanate. The adhesion agent is preferably used to coat the nanoparticle population having the bigger size, to which at least one nanoparticle population having a smaller size is grafted.

When two nanoparticle populations are used to prepare the raspberry nanoparticles, the ratio (amount of smaller nanoparticles) / (amount of bigger nanoparticles) preferably ranges from 60/1 to 20/1, more preferably from 40/1 to 25/1. This ratio ensures the smaller nanoparticles to fully coat the larger nanoparticles in a single layer.

It should be noted that it is also possible to obtain raspberry nanoparticles by the method of Stöber et al. (J. Colloid and Interface Science 26, 1968, 62-69) by inducing the synthesis of small particles on the surface of large ones by growth of a SiOx layer (Tetraethoxysilane-based).

In optional step iii), a purification may be required when the smaller nanoparticles have been added in excess relative to the nanoparticles of larger diameter. In this case, the purification removes the unbound small nanoparticles so that they do not interfere with the deposition of the raspberry nanoparticles on the surfaces. This step may also allow to change the solvent in which the raspberry nanoparticles are dispersed, when the solvent in which they have been formed is not an appropriate solvent to carry out the surface deposition in step v). In this case, it is possible to dry the raspberry nanoparticles in order to disperse them in another solvent. The purification step may, for example, be implemented by filtering or by centrifuging the raspberry nanoparticles formed..It is also recommended to carry out solvent exchange steps and always stay in a solvent environment without a drying phase of the nanoparticles.

During step iv), the raspberry nanoparticles are treated with at least one hydrophobic agent, preferably as a suspension in liquid phase, which generally results in grafting of the hydrophobic agent. The functionalization with said at least one hydrophobic agent is always performed before deposition of the nanoparticles on the surface.

In step v), the functionalized raspberry nanoparticles are deposited on the surface to be treated, which was optionally first submitted to a chemical or physical activation treatment or to a treatment with a binder, as described above. This generates a textured surface. The optional binder may also be present in the coating composition containing the functionalized raspberry nanoparticles, or be applied once the functionalized nanoparticles have been deposited onto the surface to be treated. However, the steps of depositing the nanoparticles (raspberry or not) and of depositing the binder are preferably concomitant.

In one embodiment, preparation and deposition of the raspberry nanoparticles are conducted in a repeated manner.

The nanostructured film of the invention comprises hydrophobic-functionalized nanoparticles that may be associated with at least one binder.

The binder (or adhesive) used in the article of the invention may be any material used to form a film. The binder is defined as a component that improves the adhesion of the particles to the article or the particles with each other. This binder must, on its own, have a strong interaction with the nanoparticles and may be able to bind the functionalized nanoparticles and/or with itself to act as a matrix which imprisons the nanoparticles. It can modify the durability and removability of the temporary treatment with the present nanostructured layer.

In some embodiments, the binder can also be a hydrophobic compound, bearing for example a fluorinated group. In the present application, when the term binder is used without additional precision, it refers to a binder compound that is not primarily used to functionalize the nanoparticles.

Preferably, the binder is a compound capable of establishing at least one intermolecular bond or interaction with groups at the surface of the article. Different categories of intermolecular bonds or interactions can be established, including, without limitation: covalent bonds and non-covalent intermolecular bonds or interactions, such as a hydrogen bond, a van der Waals bond, a hydrophobic interaction, an aromatic CH-π interaction, a cation-π interaction or a charge-charge attractive interaction.

Preferably, the binder is a compound capable of establishing at least one interaction, preferably a covalent bond, with a group at the surface of the nanoparticles.

Preferably, the binder is an organic material. The binder can be formed from a thermoplastic material. Alternatively, the binder can be formed from a material that is capable of being cross-linked. It is also within the scope of this invention to have mixtures of those materials, for example a mixture a thermoplastic binder and a cross-linked binder.

More preferably, the binder is a compound which is capable of being cross-linked, for example by polycondensation, polyaddition or hydrolysis. Various condensation curable resins and addition polymerizable resins, for example ethylenically unsaturated coating solutions comprising monomers and/or prepolymers, can be used to form the binders. Specific examples of cross-linkable materials useable include phenolic resins, bismaleimide resins, vinyl ether resins, aminoplast resins having pendant alpha, beta unsaturated carbonyl groups, urethane resins, polyvinylpyrrolidones, epoxy resins, (meth)acrylate resins, (meth)acrylated isocyanurate resins, urea-formaldehyde resins, isocyanurate resins, (meth)acrylated urethane resins, (meth)acrylated epoxy resins, acrylic emulsions, butadiene emulsions, polyvinyl ester dispersions, styrene/butadiene latexes or mixtures thereof. The term (meth)acrylate includes both acrylates and methacrylates.

Other examples of useful binder resin materials can be found in EP 1315600, US 5,378,252, and US 5,236,472.

A preferred category of binder materials useful in the present invention comprises silica organosols, for example multifunctional silanes, siloxanes or silicates (alkali metal salts of silicon-oxygen anions) based compounds or hydrolyzates thereof, zirconium or titanium alkoxydes or hydrolyzates thereof, for examples difunctional compounds. Upon hydrolysis, such organofunctional binders generate interpenetrating networks by forming silanol groups, which are capable of bonding with the organic or inorganic surface of the article and have an affinity for the nanoparticles. In one embodiment, the binder comprises at least one silicon atom bearing at least one hydrolyzable group.

Examples of silicon-containing binders are amino-functional silane or amino-functional siloxane compounds such as amino alkoxy silanes, hydroxyl-terminated silanes or alkoxysilanes such as tetra-alkoxysilanes, trialkoxysilanes epoxy alkoxy silanes, silane isocyanates such as 3-(trimethoxysilyl)propyl isocyanate, ureidoalkyl alkoxy silanes, dialkyl dialkoxy silanes (e.g., dimethyl diethoxy silane DMDES), (meth)acrylic silanes, carboxylic silanes, silane-containing polyvinyl alcohol, vinylsilanes, allylsilanes, and mixtures thereof. Tetra-alkoxysilanes such as tetraethyloxysilane (TEOS) or tetramethyloxysilane (TMOS) are a most preferred category.

Amino alkoxy silanes may be chosen from, without limitation, 3-amino propyl triethoxy silane, 3-amino propyl methyl dimethoxy silane, 3-(2-amino ethyl)-3-amino propyl trimethoxy silane, amino ethyl triethoxysilane, 3-(2-amino ethyl) amino propyl methyl dimethoxy silane, 3-(2-amino ethyl)-3-amino propyl triethoxy silane, 3-amino propyl methyl diethoxysilane, 3-amino propyl trimethoxysilane, and mixtures thereof.

Ureidoalkyl alkoxy silanes may be chosen from, without limitation, ureidomethyl trimethoxysilane, ureidoethyl trimethoxysilane, ureidopropyl trimethoxysilane, ureidomethyl triethoxysilane, ureidoethyl triethoxysilane, ureidopropyl triethoxysilane, and mixtures thereof.

The binder may also comprise epoxy alkoxy silanes compounds, more preferably alkoxysilanes having a glycidyl group and even more preferably trifunctional alkoxysilanes having a glycidyl group.

Among such compounds, the binder may comprise, for example, glycidoxy methyl trimethoxysilane, glycidoxy methyl triethoxysilane, glycidoxy methyl tripropoxysilane, α-glycidoxy ethyl trimethoxysilane, α-glycidoxy ethyl triethoxysilane, β-glycidoxy ethyl trimethoxysilane, β-glycidoxy ethyl triethoxysilane, β-glycidoxy ethyl tripropoxysilane, α-glycidoxy propyl trimethoxysilane, α-glycidoxy propyl triethoxysilane, α-glycidoxy propyl tripropoxysilane, β-glycidoxy propyl trimethoxysilane, β-glycidoxy propyl triethoxysilane, β-glycidoxy propyl tripropoxysilane, γ-glycidoxy propyl trimethoxysilane, γ-glycidoxy propyl triethoxysilane, γ-glycidoxy propyl tripropoxysilane, hydrolyzates thereof, and mixtures thereof. γ-glycidoxy propyl trimethoxysilane (Glymo), which is commercially available from Merck, is the most preferred binder material.

Other useful alkoxysilanes having a glycidyl group are mentioned in WO 2007/068760.

In another preferred embodiment, the binder is a fluorinated compound of formula (II):

(R³)ₙ₃(R⁴)ₙ₄M-R'-M(R⁵)ₙ₅(R⁶)ₙ₆ (II)

wherein:
- M represents a tetravalent metal or metalloid, for example Si, Sn, Zr, Hf or Ti, preferably silicon,
- R³, R⁴, R⁵ and R⁶, being the same or different, represent hydrolyzable groups, preferably chosen from the hydrolyzable groups indicated for the compound of formula (I),
- R' represents a fluorinated divalent group, which provides a hydrophobic property to the nanoparticles. It is preferably a linear or branched perfluoroalkylene, perfluorooxyalkylene, perfluoroalkylenethio, fluoroalkylene (which means an alkylene group comprising at least one fluorine atom), fluorooxyalkylene, fluoroalkylenethio group or a combination thereof. R' may be polymeric, oligomeric or monomeric and can thus be a fluoropolyether or a perfluoropolyether group. It is preferably oligomeric or monomeric,
- n₃, n₄, n₅, and n₆ are integers from 0 to 3 with the proviso that n₃ + n₅ and n₄ + n₆ both are different from zero, and n₃ + n₄ = n₅ + n₆ = 3.

Preferred R' groups are perfluoroalkylene or fluoroalkylene groups, preferably those which can be represented by the general formula -R^{a}-R^{b}-(R^{c})_{nc}-, in which R^{a} and R^{c} are identical or different alkylene groups, R^{b} is a fluoroalkylene or perfluoroalkylene group and nc is 0 or 1, preferably 1. R^{a} and R^{c} preferably comprise 1 to 10 carbon atoms, more preferably 1 to 5, and R^{b} is preferably comprises 2 to 15 carbon atoms, more preferably 4 to 8. R' represents preferably the following group: -C₂H₄-C₆F₁₂-C₂H₄-.

The preferred compounds of formula (II) have the following structure, where R' and R³ as such as defined previously:

(R³)₄Si-R'-Si(R³)₄ (IIa)

The most preferred compound of formula (II) is (H₅C₂O)₃Si-C₂H₄-C₆F₁₂-C₂H₄-Si(OC₂H₅)₄ of formula (IIb). Due to their fluorinated group, compounds of formula (II) are hydrophobic compounds that can be used to strengthen the hydrophobic character of the nanostructured film.

The above mentioned examples of binder materials are a representative showing of binder materials, and not meant to encompass all binder materials. Those skilled in the art may recognize additional binder materials that may fall within the scope of the invention, such as titanium alkoxides, aluminum alkoxides, zirconium alkoxides and, more generally, transition metal alkoxides.

The binder, when present, is preferably comprised in the nanostructured temporary super-hydrophobic film in an amount ranging from 1 to 40 % by weight, relative to the total weight of the film, more preferably from 2 to 30 % by weight.

The coating composition optionally comprises a catalytic amount of at least one curing catalyst such as an initiator when the energy source used to cure or set the binder/hydrophobic agent is heat, ultraviolet light, or visible light. Examples of curing agents such as photoinitiators that generate free radicals upon exposure to ultraviolet light or heat include organic peroxides, azo compounds, quinones, nitroso compounds, acyl halides, hydrazones, mercapto compounds, pyrylium compounds, imidazoles, chlorotriazines, benzoin, benzoin alkyl ethers, diketones, phenones, and mixtures thereof.

When silicon-containing binders are employed, a curing catalyst such as aluminum acetylacetonate or a hydrolyzate thereof may be used.

The remaining of the composition is essentially comprised of solvents.

In this connection, preferred solvents are fluorinated solvents and alkanols such as methanol, ethanol, isopropanol, propan-1-ol, butan-1-ol, butan-2-ol, tert-butanol, or a mixture thereof. Examples of fluorinated solvents include any partially or totally fluorinated organic molecule having a carbon chain with from about 1 to about 25 carbon atoms, such as hydrofluoroolefins (HFO), fluorinated alkanes, preferably perfluoro derivatives and fluorinated ether oxides, preferably perfluoroalkyl alkyl ether oxides, and mixtures thereof. As fluorinated alkanes, perfluorohexane ("Demnum" from DAIKIN Industries) may be used. As fluorinated ether oxides, methyl perfluoroalkyl ethers may be used, for instance methyl nonafluoro-isobutyl ether, methyl nonafluorobutyl ether or mixtures thereof, such as the commercial mixture sold by 3M under the trade name HFE-7100. Preferred solvents include a mixture of hydrofluoroolefins and alcohols, preferably isopropyl alcohol. The solvent preferably comprises at least 50 %, 75 %, 80 %, 85 %, 90 % or 95 % of hydrofluoroolefins by weight. The amount of solvent in the coating composition preferably ranges from 80 to 99.99% by weight.

Nanoparticles may be deposited using a dilute coating composition comprising 1-15 g of nanoparticles per liter of solvent, preferably 1-10 g/L and more preferably 2-8 g/L.

The invention also relates to a method of forming an article as described above, comprising:
- providing an article having at least one a surface exhibiting a static contact angle with
   water of less than 60°,
- depositing on said surface, preferably by spraying, a coating composition comprising nanoparticles functionalized with at least one hydrophobic agent so that said surface is at least partially coated with a nanostructured temporary super-hydrophobic film having a static contact angle with water of at least 140° and exhibiting preferably multiple length scales of roughness, and, preferably, the static contact angle with water of the temporary super-hydrophobic film is maintained at 140° or above after immersing the article for 30 seconds in deionized water.

In general, the functionalized nanoparticles are applied on the surface to be treated in a one-step deposition treatment to provide a monolayer film.

Obviously, it is possible to perform multiple depositions of functionalized nanoparticles, so as to create what could be considered as a multilayered nanostructured film comprising several sub-layers of nanoparticles based on materials that may be identical or different.

The coating composition comprising the functionalized nanoparticles is typically in a flowable state, which means that it can be spread across a surface using any of a variety of coating methods.

The temporary film may be deposited by any suitable conventional method, in the vapor phase (deposition under vacuum), or in the liquid phase, for example by spin coating, dip coating, spray coating, flow coating, meniscus coating, capillary coating, wiping and roll coating, of a liquid coating composition. The functionalized nanoparticles are preferably applied from a coating composition by any process known in the art of liquid composition coating, ideally by spraying.

The term "spray" is understood to mean a means of deposition where a suspension is projected in fine droplets onto the surface, optionally using a means of propulsion such as for example a gas in the case of an aerosol spray. The mixture can be projected onto the surface in order to wet the totality thereof. Generally, it is sufficient to proceed only once or twice with this operation to obtain a resistant super-hydrophobic film. The sprayer that is used is a mechanical system that can be as simple as a hand sprayer. Electrostatic spray coating method can also be used.

To carry out the spraying operation, the functionalized nanoparticles are preferably dispersed in a solvent, constituting a "suspension". It is important to note that no solubilization is required, because the nanoparticles are in suspension in the solvent concerned. The solvent must nevertheless make it possible to wet the material to be coated properly, which is the case with most of the liquids conventionally used for coating surfaces. As described previously, the suspension containing the functionalized nanoparticles is preferably a suspension in fluorinated solvents, alkanols or mixture thereof.

In a first and preferred embodiment, the optional binder is present in the coating composition, so that the nanoparticles are at least partially coated with said binder before they are contacted with the surface to be treated. The binder may cross-link the surface coated with the nanoparticles, i.e., bind the particles to the surface, and bind the various particles to each other, to make the super-hydrophobic treatment of the invention more durable and resistant to mechanical and chemical stresses.

In another embodiment, the binder is applied once the functionalized nanoparticles have been deposited on the surface to be treated.

The step of depositing the optional binder and/or the step of depositing a nanoparticle population can be carried out several times, i.e., from 2 to 10 times, more preferably from 2 to 6 times. For example, it is possible to deposit at least three nanoparticle populations of different sizes. It is possible to add the binder after each deposition of nanoparticles, or only at the end of the process, after all the nanoparticles have been deposited.

In a preferred embodiment, the nanostructured film is deposited in a single step.

More details concerning the use of binders such as tetraethoxysilane in the context of nanostructured layers can be found in WO 2015/177229.

The temporary film is preferably formed on the whole of a main surface of the article, i.e., so that it covers its surface completely.

The process of the invention may also be applied to part of the surface to be treated. If only part of the surface must be made super-hydrophobic, it is possible to use masks to avoid coating certain parts of the surface with nanoparticles and thus to provide regions not functionalized by the super-hydrophobic coating at the end of the process. The mask may be removed or degraded at the end of the process by techniques known to a person skilled in the art. Another possibility for saving regions of the surface is to carry out a localized projection of the hydrophobic nanoparticles.

During the process of making the inventive article, the coating composition, once deposited, can be hardened by being exposed to appropriate conditions, such as exposure to heat in an oven or drying with air. Hardening a coating layer comprises evaporating the solvent and solidifying the binder/hydrophobic agent. For cross-linkable coating compositions, the deposited coating solution is exposed to the appropriate energy source to initiate the polymerization or curing and to form the hardened coating. Air drying is preferred. Generally, the process according to the invention allows to obtain super-hydrophobic properties without needing to heat the surfaces to be treated.

The invention provides nanostructured temporary films having a very high hydrophobicity, i.e., a static contact angle with water of at least 140°, preferably at least 145°, more preferably at least 150°. The sliding angle of said film is preferably lower than or equal to 20°, more preferably lower than or equal to 15°, 10°, 8°, 5°, or 3°.

The thickness of the temporary film according to the invention is preferably lower than 500 nm, more preferably ranges from 50 nm to 400 nm, and even better from 50 nm to 300 nm or from 50 to 150 nm.

The article coated with the present nanostructured temporary super-hydrophobic film exhibits a good cosmetic appearance, in particular low haze and high light transmission, which means a good visibility for a user and no discomfort brought by the treatment.

Haze is the percentage of transmitted light that, in passing through a specimen, deviates from the incident beam by forward scattering. Haze (or light diffusion) is measured by light transmission measurements according to ASTM D1003-00. All references to "haze" values are measured according to this standard. As haze increases, loss of contrast occurs until the object cannot be seen.

The article coated with the present nanostructured temporary super-hydrophobic film preferably has a haze value as determined by the standard ASTM D1003-00 of 1.5 % or less, more preferably lower than or equal to 1.3 %, 1.2 %, 1.1 %, 1 %, 0.8 %, 0.7 %, 0.6 % or 0.5 %.

The article coated according to the invention does preferably not absorb in the visible region or not much, which means, in the context of the present application, that its relative light transmission factor in the visible spectrum Tv is higher than or equal to any one of the following values: 87 %, 88 %, 89 %, 90 %, 92 %, 95 %, 96%, 97%, 98%. Said Tv factor preferably ranges from 87 % to 98.5 %, more preferably from 87 % to 98 %, even better from 90 % to 97 %. In another embodiment, Tv ranges from 89% to 98%, preferably from 90% to 98%, better 95% to 97%.

The Tv factor, also called "luminous transmission" of the system, is such as defined in ISO standard 13666:1998 and is measured accordingly to the standard ISO 8980-3. It is defined as the average in the 380-780 nm wavelength range that is weighted according to the sensitivity of the eye at each wavelength of the range and measured under D65 illumination conditions (daylight).

The present invention is advantageously used for texturing surfaces in order to make them super-hydrophobic. More generally, it may be used to reduce the adhesion of liquids, of solids or of any other contaminant on surfaces, in order to improve visibility. It provides an intrinsic antirain functionality, where even smaller rain droplets are totally expelled from the treated surface, so there are no droplets remaining to disturb the vision. Water droplets bounce on the super-hydrophobic surface and clear visibility remains even in harsh raining conditions. On non super-hydrophobic surfaces, diffusion of light through water drops results in optical distortion, and can thus interfere with clear vision.

A main advantage of the present technical solution is that it results in an efficient and very easy-to-use solution for a user consisting in just one application step of a coating composition and no additional step to get a functional treatment (as opposed to the process of WO 2015/177229 implying a first step of spraying a nanoparticle suspension, and then a second step of hydrophobization of the surface).

In the present application, a temporary super-hydrophobic film is understood to mean a removable film obtained after the application of nanoparticles functionalized with at least one hydrophobic agent on the surface to be treated. The durability of a temporary film is generally limited by actions in which its surface is wiped, the nanoparticles being not permanently attached to the surface of the article, but simply adsorbed in a more or less lasting fashion.

In the present application, a layer is defined as being temporary when at least 90 % by weight of the layer, preferably 100 %, can be removed though a wiping operation, consisting of 5 to and fro movements on the wiping area with a dry or wet Wypall L40® cloth from the KIMBERLY-CLARK corporation, while maintaining a pressure ranging from 60 g/cm² to 3 kg/cm².

The temporary super-hydrophobic film according to the invention offers the advantage that it can be removed very easily and completely, if desired, without any remaining traces, thus recovering the initial surface properties that have been temporarily masked. Indeed, the material of this temporary film has sufficient cohesive force so that the withdrawal of the temporary film is carried out without leaving residues at the surface of the article. This is crucial in case of contamination by dirt, since the coating can be simply removed to recover the optical quality, while permanent super-hydrophobic films need to be subjected to a very cumbersome cleaning step.

The removal can be carried out either in a liquid medium, or by a mechanical treatment of the surface, preferably by wiping, notably by dry wiping, or by combining these two means. Other methods of removal in a liquid medium are notably described in application WO 03/057641. Wiping with a tissue or cloth optionally impregnated with alcohol such as isopropyl alcohol just before wiping is the preferred removal technique, more preferably a wet cloth, such as a Cemoi™ or Wypall™ cloth. Using a wet cloth rather than a dry cloth is preferred in order to completely remove the nanostructured temporary super-hydrophobic film by wiping. It is preferably carried out manually, as anyone would do to clean an optical article such as a lens, i.e., with a mild pressure, during a few seconds. A complete removal of the temporary film can also be obtained by washing the article with soap and water.

After removal of the temporary super-hydrophobic film, the initial properties of the article are restored, such as transparency, haze values, static contact angle with water (less than 60°), light transmission and colorimetric features. The material of the temporary film according to the invention did not detrimentally affect the surface properties of the article.

Another nanostructured temporary film can even be reapplied on the article by the same process to recover super-hydrophobic properties, when needed. Thus, treatment by the present functionalized nanoparticles is reversible and allows to alternate between the antirain functionality and the initial functionality. In addition to this, the thinness of the film allows to keep available functionalities that were present in the article, for example antireflection properties.

Although the temporary super-hydrophobic film can be easily removed, it is yet resistant enough to display an antirain function. Indeed, the film exhibits mechanical resistance to water, such as immersion in water and/or water impacts like water fall drop-by-drop, as shown in the experimental part.

In one embodiment, the static contact angle with water of the temporary super-hydrophobic film is maintained at 140° or above after immersing the article for 30 seconds in deionized water. Preferably, its sliding angle is maintained at 20° or less under the same conditions, more preferably at 10° or less.

The following examples illustrate the invention in more detail but without implied limitation. Unless otherwise indicated, all the thicknesses appearing in the present patent application are physical thicknesses.

### EXAMPLES

### 1. Materials

The articles employed in the examples comprise a 65 mm-diameter ORMA® lens substrate (polymer obtained by polymerization of diethylene glycol bis (allyl carbonate) from Essilor based on CR-39® monomer, refractive index = 1.5), coated on its convex face with the impact resistant primer coating based on a W234™ polyurethane material disclosed in the experimental part of WO 2010/109154 modified to have a refractive index of 1.6 by addition of high refractive index colloids and the abrasion- and scratch-resistant coating (hard coat) disclosed in example 3 of EP 0614957 (modified to have a refractive index of 1.6 rather than 1.5 by adding high refractive index colloids), both deposited by dip coating, the antireflective coating of example 6 of the patent application WO 2008/107325 and with an antifog coating precursor deposited by evaporation under vacuum.

Said antireflection coating was deposited by evaporation under vacuum, and comprised a 150 nm thick SiO₂ sub-layer and the stack ZrO₂/SiO₂/ZrO₂/ITO/SiO₂ (respective thicknesses of the layers: 29, 23, 68, 7 and 85 nm). An ITO layer is an electrically conductive layer of indium oxide doped with tin (In₂O₃:Sn).

The antifog coating precursor coating was made from the organosilane compound 2-[methoxy(polyethyleneoxy)propyl]trimethoxysilane comprising from 6 to 9 ethylene oxide units of formula (C) and with a molecular weight 450-600 g/mol (CAS No.: 65994-07-2. Ref: SIM6492.7, provided by the Gelest, Inc. company), in the manner disclosed in the application WO 2011/080472 (thickness: from 1 to 3 nm).

The treating machine was a 1200 DLF from Satis, or a BAK4 machine from Balzers equipped with an electron gun for the evaporation of the precursor materials, a thermal evaporator, and a KRI EH 1000 F ion gun (from Kaufman & Robinson Inc.) for use in the preliminary phase of preparation of the surface of the substrate by argon ion bombardment (IPC) and in the ion-assisted deposition (IAD) of layers.

### 2. Synthesis of raspberry nanoparticle suspensions

Raspberry nanoparticles were synthesized based on large silica particles (50 nm) onto which a chemical group was grafted (-NCO). These nanoparticles were then contacted with smaller silica particles (15 nm).

Spherical nanoparticles of silica having an average diameter of 50 nm ("NP50") were functionalized to obtain isocyanate (-NCO) groups on their surface, as disclosed in the experimental part of WO 2015/177229, using the adhesion agent 3-(triethoxysilyl)propyl isocyanate. "NP50-NCO" nanoparticles were produced.

Spherical nanoparticles of silica having an average diameter of 15 nm ("NP15"), which naturally comprise hydroxyl (-OH) groups on their surface, were used as received. A suspension of "NP15-OH" nanoparticles in methoxypropyl acetate was produced.

Then, thanks to their complementary reactive groups, the NP15-OH nanoparticles were covalently grafted onto NP50-NCO nanoparticles in methoxypropyl acetate solvent (CAS n° 108-65-6), by introducing the NP50-NCO nanoparticles in a suspension of NP15-OH nanoparticles. The reaction mixture was heated at 110°C overnight.

The smaller NP15-OH nanoparticles were used in excess (ration 30:1) to be sure to cover the surface of the NP50-NCO nanoparticles, to yield a stable suspension in methoxypropyl acetate of raspberry nanoparticles called "NPF80" nanoparticles, with a particle concentration of 50 g/L.

The methoxypropyl acetate solvent was replaced by a hydrofluoroolefin solvent (Vertrel Suprion from Chemours, comprising methoxytridecafluoroheptene isomers) following several series of centrifugation/removal of supernatant solvent/addition of hydrofluoroolefin steps.

### 3. Preparation of a suspension of raspberry nanoparticles functionalized with a hydrophobic agent

After the solvent exchange step, a fluorinated silane hydrophobic agent was added to the raspberry nanoparticles NPF80 suspension in hydrofluoroolefin, in excess ratio, and the suspension was stirred for 24h at 110°C. The excess of hydrophobic agent that has not reacted with the nanoparticles was eliminated from the suspension by successive centrifugation/solvent removal/washing with butyl acetate/addition of pure hydrofluoroolefin solvent steps, leading to a stable suspension of functionalized raspberry nanoparticles with a particle concentration of about 50 g/L.

Then, the suspension in hydrofluoroolefin was diluted with an adequate mixture of hydrofluoroolefin and isopropanol (provided by Fisher Scientific) to obtain a final suspension of raspberry nanoparticles in 95/5 hydrofluoroolefin / isopropanol, with a particle concentration of 5 g/L, ready for deposition onto surfaces.

In example 2, a binder (tetraethoxysilane, CAS N° 78-10-4) was added in the form of a solution in isopropanol to get a concentration of 2.5 mM of binder, or 10 mM in example 4.

In example 3, the compound SP-02-001 provided by Specific Polymers (CAS N° 155881-89-3, triethoxysilane content: 2.3 meq/g) was added in the coating composition as a hydrophobic binder in the form of a solution in hydrofluoroolefin to get a concentration of 2.5 mM of binder. It is a mixture comprising 15.5 mol % of the difunctional fluoro alkyl bis(triethoxysilane) of formula (IIb) (H₅C₂O)₃Si-C₂H₄-C₆F₁₂-C₂H₄-Si(OC₂H₅)_{4,} 47.5 mol% of the corresponding monofunctional fluoro alkyl triethoxysilane of formula (Ic) CH₃-CH=CF-C₅F₁₀-C₂H₄-Si(OC₂H₅)₃ and 37.1 mol% of the compound CH₃-CH=CF-C₄F₈-CF=CH-CH₃.

The following fluorinated silane was used as hydrophobic agent to functionalize the raspberry nanoparticles. This trimethoxysilane perfluoropolyether of formula (Ib) was provided by Surfactis Technologies (MW = 989 g/mol):

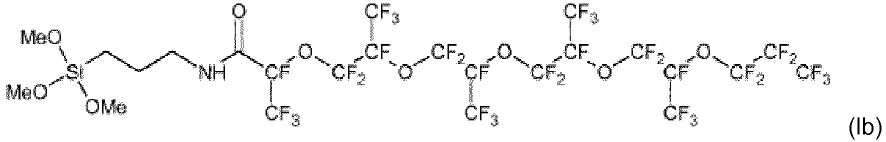

### 4. Deposition of the nanostructured temporary super-hydrophobic film

Each lens (having a precursor coating for an antifogging coating as outer coating) was subjected to the following washing procedure before deposition of the liquid coating composition containing the functionalized nanoparticles. The lens was rinsed with soapy water using a sponge (4 rotations convex face, 4 rotations concave face), thoroughly rinsed with tap water, dipped in a beaker of deionized water 3 or 4 times, dried with a cloth (Selvyt), rubbed (circular wiping) with a Cémoi™ fabric soaked in isopropyl alcohol, and wiped with a clean and dry Cémoi™ fabric. The Cémoi™ fabric denotes a microfiber fabric (manufacturer KB SEIREN - distributor: Facol, reference Microfibre M8405 30x40).

The liquid coating composition was applied on the surface to be treated at least five minutes after it was washed, by means of a 50 mL sprayer (simple water mister) with two successive sprayings without intermediate drying. This allows the deposition of a wet film on the whole surface of the lens and to a homogeneous drying (drying was carried out at room temperature for 1 minute). The amount of liquid composition used to treat a lens was about 0.5 mL.

### 5. Removal and reapplication of the nanostructured temporary super-hydrophobic film

The temporary film was removed by wiping with a Cemoi™ cloth impregnated with a few drops of isopropyl alcohol, by applying a mild pressure and circular movements on the lenses. A measure of contact and sliding angles after wiping allows the determination of whether the temporary film was successfully removed.

It can be reapplied on the wiped lens by the same process as the initial application (same spraying composition and deposition conditions).

### 6. Testing methods

The following test procedures were used to evaluate the optical articles prepared according to the present invention.

The thickness of the layers was controlled by means of a quartz microbalance.

The haze value H (diffusion rate) of both the reference and the tested optical article were measured by light transmission as disclosed in WO 2012/173596 utilizing the Haze-Guard Plus haze meter from BYK-Gardner (a color difference meter) according to the method of ASTM D1003-00 before and after the test has been performed. As haze is a measurement of the percentage of transmitted light scattered more than 2.5° from the axis of the incident light, the smaller the haze value, the lower the degree of cloudiness. Generally, for optical articles described herein, a haze value of less than or equal to 1.5 % is acceptable, more preferably of less than or equal to 1 %.

The static contact angles with water of the surfaces were determined at 25°C according to the liquid drop method, according to which three deionized water drops having a diameter of less than 2 mm (typically 20 µL for a standard surface such as a hydrophobic or hydrophilic surface, 4 µL for a super-hydrophobic surface) were deposited gently on a cleaned and dried planar lens surface, one on the center thereof and the two others 20 mm away from the latter. The angle at the interface between the liquid and the solid surface was measured with a Dataphysics SCA20. Water had a conductivity of between 0.3 µS and 1 µS at 25°C. Sliding angles, i.e., tilt angles at which a water droplet begins to slide, were determined with the same apparatus with 20 µL or 4 µL deionized water drops in two points of the lens.

The durability of the super-hydrophobic treatment was evaluated by immersing the lenses for 30 seconds in deionized water. Other durability tests were performed to investigate resistance to water impacts of the super-hydrophobic treatment. In the water jet test, a focused jet (Ø ≈ 2 mm) was sprayed onto the surface of the lenses at a distance of 10 cm. A jet represents a volume of water of 1 mL and exerts a force of 0.1 N. 15 sprays were applied on the same zone of the coated lens. In the dripping test, the lenses were placed at an angle of 45° with the horizontal under a 250 mL introduction funnel delivering deionized water drop by drop. The water fell on the lens surface from a height of 70 cm. The test lasts about 20 minutes.

The durability tests are successful ("pass") if the super-hydrophobic properties of the lens are maintained after each test, i.e., if the static contact angle with water of the temporary super-hydrophobic film is maintained at 140° or above and the sliding angle is maintained at 10° or lower.

The antifogging properties can be evaluated according to the "hot vapor test", which is considered as generating a high fog stress. After removal of the nanostructured temporary film of the invention by wiping, the antifog coating precursor coating was "activated" by conversion into an antifog coating through wiping the surface of the articles with a CEMOI™ cloth (M840 S(30x40)) manufactured by KB SEIREN, supplier Facol Microfibre) previously 1°) impregnated with a solution containing 5% by weight of the surfactant Capstone™ 3100 in a mix deionized water/isopropyl alcohol in respective volume ratio 80/20 and 2°) submitted to a thermal drying during 3 minutes in an oven at 120°C. The lenses were placed for 24 hours in a temperature-regulated environment (20-25°C) and under 50% humidity, and then their convex side was placed for 15 seconds above a heated container comprising water at 50°C. Immediately after, a visual acuity scale (Snellen optotype table) located at a distance of 5 m was observed through the tested lens. This step was repeated three times.

To pass the test, the lens needs to keep its antifog function (no fogging, no distortion, visual acuity = 10/10) as evaluated by the observer. This test makes it possible to simulate the ordinary living conditions where a wearer leans his face towards a cup of tea/coffee or towards a pan filled with boiling water.

### 7. Results

Table 1 indicates for the ophthalmic lenses treated the surface properties displayed:
- before deposition of a nanostructured temporary super-hydrophobic film ("initial properties"),
- after deposition of a nanostructured temporary super-hydrophobic film,
- after removal of the nanostructured temporary super-hydrophobic film.

**Table 1**

| Example | 1 | 2 | 3 | 4 |
|---|---|---|---|---|
| Surface treated | Antifog coating precursor | Antifog coating precursor | Antifog coating precursor | Antifog coating precursor |
| Binder | - | TEOS 2.5 mM | SP-02-001 2.5 mM | TEOS 10 mM |
| Hydrophobic agent | Compound Ia | Compound Ia | Compound Ia | Compound Ia |
| Initial water contact angle | 40° +/- 2° | 40° +/-2° | 40° +/-2° | 40° +/-2° |
| Initial haze | 0.03 % +/-0.02% | 0.03 % +/-0.02% | 0.03 % +/-0.02% | 0.03 % +/-0.02% |
| Initial Tv | 95.7 % +/-0.2% | 95.7 % +/-0.2% | 95.7 % +/-0.2% | 95.7 % +/-0.2% |
| Water contact angle after super-hydrophobic film deposition | > 150° | > 150° | > 150° | > 150° |
| Sliding angle after super-hydrophobic film deposition | < 10° | < 10° | < 10° | < 10° |
| Haze after super-hydrophobic film deposition | 0.5 % (**) | 0.4 % (**) | | 1.1 % (**) |
| Tv after super-hydrophobic film deposition | 95.2 % (**) | 95.3 % (**) | 95.3 % (**) | 95.3 % (**) |
| Immersion test | Pass | Pass | Pass | Pass |
| Water contact angle after super-hydrophobic film removal by wet wiping | 41.2° (*) | N/A | 46.4° | 46.0° (***) |
| Hot vapor test after super-hydrophobic film removal by wet wiping and surfactant film application | Pass | Pass | Pass | Pass |

| | | | | |
|---|---|---|---|---|
| (*) Wiping with a Cemoi™ cloth impregnated with isopropanol. The water contact angles were 66-74° after dry wiping with a Cemoi™ or Wypall™ cloth. (**) data measured on one lens. (***) The water contact angles were 79-80° after dry wiping with Wypall™ cloth. N/A: non available | | | | |

After deposition of a nanostructured temporary film according to the invention, the lens is imparted super-hydrophobic properties (water contact angle ≥ 140°, sliding angle ≤ 10°) with a low level of haze. Although the treatment brings about some haze increase, the level of haze obtained is acceptable for the user (≤ 1.5 %), and the transmission factor Tv is hardly not affected, which offers clarity of vision under rain.

The lenses were subjected to several tests to evaluate the mechanical resistance of the treatment to water. Super-hydrophobic properties were neither impacted by water immersion, nor by the dripping test performed consecutively.

The super-hydrophobic coating passed the water immersion test described above, which makes it compatible with a use under rain. It has also been observed that the film had a very good resistance to water impacts. The super-hydrophobic properties were maintained after the dripping test described above, consisting in making 250 mL of deionized water fall drop-by-drop on one point of the lens from height of 70 cm, or after the water jet test described above. Visually, water drops bounce off the surface of treated lenses, so there are no droplets remaining to disturb the vision.

The temporary film could be easily removed from the surface of the coated lenses without leaving residues. After wiping with a wet textile (or washing with soap and water), the initial transparency, haze values and colorimetric features of the lenses were recovered. The water contact angle after removal of the film is close to the initial water contact angle of the treated surface.

Further, the initial antifog function was fully restored when the temporary nanostructured film was removed by wet wiping (after applying a surfactant solution on the thus wiped antifog coating precursor), as demonstrated by the success in the hot vapor test. The hot vapor test could be repeated a second time with the same success without the need to reapply a surfactant solution on the outer surface of the lens.

It has also been checked that after removal of a first temporary film by wet wiping, a new temporary film could be applied on the lens using the same application process and provided the same super-hydrophobic properties to the lens, with the same haze level.

However, it should be noted that using a dry tissue for the wiping (Cemoi™ or Wypall™ cloth) did not allow to completely remove the nanostructured temporary super-hydrophobic film of the invention. Indeed, in this case, the static contact angle with water of the lenses after the dry wiping operation was between 65 and 80°, well above the initial value of 40.7°. In addition, the lenses wiped with "dry" tissue did not pass the hot vapor test, showing that the antifog function was not recovered.

## Claims

1. An article having at least one surface that is at least partially coated with a nanostructured temporary super-hydrophobic film:
- having a static contact angle with water of at least 140°,
- comprising nanoparticles functionalized with at least one hydrophobic agent, wherein the functionalization of the nanoparticles with said at least one hydrophobic agent has been performed before said nanostructured temporary super-hydrophobic film is coated on said surface,
- said surface exhibits a static contact angle with water of less than 60° before being at least partially coated with said nanostructured temporary super-hydrophobic film.

2. An article according to claim 1, wherein the hydrophobic agent is an organosilane comprising at least one fluorinated group connected to the silicon atom through a carbon atom and at least one silicon atom bearing at least one hydrolyzable group.

3. An article according to claim 2, wherein the fluorinated group is a perfluoropolyether group.

4. An article according to any one of the preceding claims, wherein the functionalized nanoparticles are bound by at least one binder.

5. An article according to any one of the preceding claims, wherein the nanoparticles have a double-scale of roughness.

6. An article according to any one of the preceding claims, wherein the temporary super-hydrophobic film comprises at least two nanoparticle populations of different size ranges, a first one having an average diameter ranging from 40 to 100 nm, and a second one having an average diameter ranging from 5 to less than 40 nm.

7. An article according to any one of the preceding claims, wherein the nanoparticles comprise a core nanoparticle having an average diameter D1 and nanoparticles having an average diameter D2 and adhering, preferably by grafting, to said core nanoparticle, with D2 < D1.

8. An article according to any one of the preceding claims, wherein the nanoparticles are made of at least one metal, at least one metal oxide, at least one metal nitride, at least one metal fluoride, or at least one polymer.

9. An article according to any one of the preceding claims, wherein the nanostructured temporary super-hydrophobic film exhibits a static contact angle with water of at least 145°.

10. An article according to any one of the preceding claims, wherein said surface exhibits a static contact angle with water of less than 45° before being at least partially coated with said nanostructured temporary super-hydrophobic film.

11. An article according to any one of the preceding claims, wherein said surface is the surface of a coating obtained through the grafting of at least one organosilane compound having a polyoxyalkylene group comprising preferably less than 80 carbon atoms, and at least one silicon atom bearing at least one hydrolyzable group.

12. An article according to any one of the preceding claims, further defined as an optical lens, preferably an ophthalmic lens.

13. An article according to any one of the preceding claims, wherein the temporary super-hydrophobic film can be removed by wiping with a cloth, preferably a wet cloth.

14. An article according to any one of the preceding claims, wherein the article has a haze value of 1.5 % or less, as determined by the standard ASTM D1003-00.

15. A method of forming an article according to any one of the preceding claims, comprising:
- providing an article having at least one a surface exhibiting a static contact angle with water of less than 60°,
- spraying on said surface a coating composition comprising nanoparticles functionalized with at least one hydrophobic agent so that said surface is at least partially coated with a nanostructured temporary super-hydrophobic film having a static contact angle with water of at least 140°.
